(19) **Europäisches Patentamt European Patent Office Office européen des brevets**

(11) **EP 3 428 993 B1**

(12) **EUROPEAN PATENT SPECIFICATION**

(45) Date of publication and mention
of the grant of the patent:
**09.11.2022 Bulletin 2022/45**

(21) Application number: **17181198.7**

(22) Date of filing: **13.07.2017**

(51) International Patent Classification (IPC):
*H01M 50/20* (2021.01)     *H01M 50/24* (2021.01)
*B60K 1/04* (2019.01)

(52) Cooperative Patent Classification (CPC):
**B60K 1/04; H01M 50/229; H01M 50/231;
H01M 50/24; H01M 50/242;** B60K 2001/0438;
B60Y 2306/01; Y02E 60/10

(54) **SAFETY BATTERY COMPARTMENT FOR BATTERY ELECTRIC VEHICLES**

SICHERHEITSBEHAELTER FÜR EINE BATTERIE IN ELEKTRISCHEN FAHRZEUGEN

COMPARTIMENT DE BATTERIE DE SÉCURITÉ POUR VÉHICULES ÉLECTRIQUES À BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.01.2019 Bulletin 2019/03**

(73) Proprietor: **Outokumpu Oyj
00180 Helsinki (FI)**

(72) Inventors:
• **Fröhlich, Thomas
  D-40878 RATINGEN (DE)**
• **Lindner, Stefan
  D-47877 WILLICH (DE)**

(56) References cited:
**DE-A1- 2 720 351     DE-A1-102011 081 710
GB-A- 2 521 764     US-A1- 2016 229 308**

**Description**

The present invention relates to a crash management system using the physical operating principle of a mechanical compression spring combined with a double floor system to protect the battery compartment and therefore the battery cells inside for Electric drive vehicles.

Parallel to the development of the automobile with combustion engines at the end of the 19th century, researchers also developed successfully on electric vehicles like Werner von Siemens with his electrically powered carriage (1882) or the electric cars developed by Ludwig Lohner und Ferdinand Porsche for the world exhibition 1900 in Paris. Because of their significant expanded range, availability and price of the fossil fuels as well as the quick refuel process, passenger cars with combustion engines dominate the 20th century. With the end of the 20th century and the changing frame conditions like a price increase and limitedness of fossil fuels, electric vehicles experience a renaissance. Beside the increase of the battery range, the topic of a safety integration of the battery compartment including the batteries (Battery electric vehicle safety) is one dominating development aspect. Statutory safety standards like the United Nations UN-R100, European ECE-R regulations, Euro NCAP, Chinese standard GB/T 31467.3-2015 or FMVSS (Federal Motor Vehicle Safety Standards) from the United States define the safety requirements.

Thereby the importance of side impacts become increasingly critical. In fact, 46% of accidents happen as a front crash plus additional 27% as rear impact so that as a result 73% of all accidents are longitudinal orientated impacts [1]. However, 53% of the analyzed 159.994 accidents of this study occur with a speed v < 20km/h, additionally 38% in a speed range between 21 ≤ v ≤ 46km/h. But for the 2% of accidents with a speed v ≥ 64km/h, the number of side-impacts increases excessive whereby 26% of those side-impacts shows a fatally effect plus 57% with a severally consequence.

For passenger car customers' safety has the highest importance of purchase criteria with 95% proportion in the category "extremely important" [2].

Sources:

[1] M. Büchsner: Integration of occupant safety systems into seating environment in the light of autonomous driving, presentation at 2nd Annual Seating Innovation Summit Berlin (6th April 2017)
[2] H.-H. Braess, U. Seiffert: Vieweg Handbuch Kraftfahrzeugtechnik, 6.Auflage, ATZ Vieweg Teubner, 2011

Electric drive vehicles are using an electric drive combined with an entrained energy storage as a drive concept. Depending on the respective drive concept electric drive vehicles can be divided into Battery Electric Vehicles (BEV) using purely electric power, Hybrid Electric Vehicles (HEV), Plug-in Hybrid Electric Vehicles (PHEVs) or Range Extended Electric Vehicles (REEV) combining an electric engine with combustion motor. Also Fuell Cell Vehicles (FCV) or Fuel Cell Hybrid Vehicles (FCHV) where the chemical stored energy in the form of hydrogen is changed into electric energy are one additonal group of electric vehicles. As an energy storage system high-voltage batteries (accumulators) like a lithium ion batteries are used as a base cell and then interconnected to modules. Various modules are assembled to the final vehicle battery. The vehicle battery is protected by a battery compartment, also called battery housing, battery pack, battery case or battery cover.

Today the battery packs for electric vehicles are suffering under the heavy weight of the batteries what has a direct impact to a lower range of the electric vehicles which has in turn a lower acceptance of buyers. At the same time the demanding crash requirements for side impact or against pole underbody load make it necessary to use thick sheets and package-intensive die-cast components what have an additional negative effect on the car body weight and again on the range and buyer acceptance. Consequently, a contradiction of lightweight and safety exists especially for electric vehicles as one big drawback of the prior art.

In point of safety, components like engine, gear and cooler of conventional vehicles with combustion engine form one part of the load patches and contribute therefore to the whole car body safety and stiffness. These components are not part of electric vehicles. Depending of the used vehicle design for an electric vehicle, further components like the centre tunnel can be cancelled because of space requirements for the battery. As a consequence, one conventional load path gets lost. Additionally, high-voltage components must not locate in a load path. Further the centre of gravity is changed to a deeper position. The described points result in a lower deformation space (also called crumble zone or crush zone) to absorb the crash energy and therefore a high challenge for the electric vehicle design. As a further drawback state of the art battery compartments increase the stiffness of the whole car body and therefore increase the forces and accelerations affecting on the occupants. Moreover, the electric vehicle manufacturers use in an increasing way high strength and ultra-high strength steels with an ultimate strength level significant over 1,000MPa, partially over 1,500MPa like press-hardenable grades, because of the reduced deformation zones to fulfil crash requirements. But this too will result in a higher stiffness of the whole system with the before pointed-out drawbacks. Because of the limited intrusion way in the underbody area where the battery vehicle is located, side-impact as well as underbody crash are critical to withstand. For state of the art battery compartments manufactured as sheet constructions, the local slitting of sharp-pointed objects like poles, bars or bollards from the underbody side are the most critical impact for the vehicle battery.

A state of the art execution example can be shown with the EP patent application 2565958B1 where only the battery housing is worked out without any crash or impact protection. The same can be noticed for the DE patent application 102014213306A1 where the battery pack was worked out as a metal/plastic hybrid component but without any crash consideration.

The DE patent application 102009035492A1 and US patent application 2016068195A1 describe a crash cross member integrated into a battery housing arranged into the transverse vehicle direction as a side impact protection for batteries. Whereas the DE patent application 102009035492A1 uses a continuous element which overhangs in booth side directions over the battery, the US patent application 2016068195A1 pointed out a multiple element system with one battery integrated center part and at least one deformation element outside. Drawbacks of booth patent applications are that the side impact is not diverted to the whole side and that the crash is highly critical if the impact force happens between the crash cross members which follows in a not allowed local impress of the battery housing and the at this place located batteries with all negative consequences. The complete view of the underbody with the underbody slitting or the pole impact is not considered for booth patent applications. Further, after a crash it is complicated, means work- and cost-intensive to disassembly the whole battery system even if the batteries are not damaged but to change the cross member (elements).

The WO patent application 2017012850A1 describes a battery arrangement where a stiffening element connected different battery segments with each other to increase the side impact strength. An area to absorb targeted the impact energy is not described. In point of the underbody construction there is only a gap between the stiffening element and the underbody sheet metal part included. The DE patent application 102016209105A1 describes another battery pack system and integration whereby also for this arrangement a distance between the underbody sheet metal part and the battery pack is adjusted without any local protection against an underbody impact.

The US patent application 2015239331A1 describes a system for absorbing and distributing the side impact energy utilizing an integrated battery pack. The way to absorb the side impact crash energy is executed by using side sills with multiple longitudinal channels. Lumens in the profile creating a distance between battery pack and battery bottom panel. The US patent application 2017029034A1 describes a battery assembly where shear pins or other deformable connectors secure edge reinforcements of a tray. During a side impact the shear pins break up and the tray moves laterally away from the impact zone. In this case a gap is constructed between the outside rocker and the battery assembly. The US patent application 2016233468A1 describes a battery enclosure which is surrounded by internally reinforced cylindrical impact absorbing elements. For all in this chapter mentioned patent applications the battery pack is adjusted without any local protection against an underbody impact. Further the US patent application 2016229308A1 describes a battery housing which is protected by T-shaped guides on the outer surface for stiffeners and absorbing elements. The attachments are orientated to extend either in a horizontal or vertical orientation.

Further from the US patent application 2016064723A1 is a mechanical or fluid resetting device known, but only to change the status of the electrical connection within the battery housing of the batteries or rather the positive and negative electrode.

The object of the present invention is to eliminate some drawbacks of the prior art and to achieve a lightweight and crash safety battery compartment to protect the vehicle battery for Electric drive vehicles by using the physical operating principle of a mechanical compression spring combined with a double floor system. In maritime navigation, a double-floor between outer-skin and inner bottom is statutory since the 19th century and serves the ship for an increased safety in the event of grounding or collision. Because the double floor for ships is rigidly connected with inner beams the whole ship stiffness increases. The present invention is defined with the subject-matter claimed.

In the present invention, the vehicle battery is covered by a battery compartment with a double-floor from the bottom side and/or the left and right hand vehicle side and/or front side and/or back side. Thereby as reasoned before the left and right hand vehicle side (side impact) and the bottom side (underbody slitting) are the preferred sides of using the double-floor system with the spring element inside. But depending on the location of the battery system, every other vehicle side can become important to safe, too. It is well known from state-of-the-art like Hybrid Electric Vehicles that battery compartments could be also positioned behind the rear seat structure or backseat bench. In this case, only the back side and the bottom side must be fully protected. The side areas can be optionally protected with the method of the present invention but depending on the vehicle construction just partially. The last aspect leads to the possibility that the double-floor system of the present invention can be also used locally or partially at one side if another surrounding component of the vehicle assume the protection for the other area. In general, the spring effect must be orientated with its working direction into crash direction.

Every side of the double-floor system is fixed independent from the others. Inside the double-floor system a material, machine element, component or assembled module is integrated having the physical operating principle of a mechanical compression spring with it working direction into crash direction and take the function of connecting the outer-skin with the inner bottom. As a result of such combination, the double-floor system which is located on the stressed or crashed impacted side will be yielded because of the spring effect and therefore absorb the crash energy without destroying of the inner bottom. Further it is possible to connect the different springs to a parallel connection. Beside the fact that the vehicle battery will be directly protected, the forces and accelerations affected to the occupants will decrease significantly, too. As one further significant benefit, especially for underbody slitting, the sharp-pointed object will slip-off if the impact takes place with a slanted angle. Because of the spring effect the contact angle will decrease. If the underbody impact of a sharp-pointed object takes place under a contact angle of 90° without the possibility of slipping, the outer-skin absorb the energy even if the sharp-pointed object will introduce into the space of the double-floor system but without damaging the battery system itself. The battery compartment of the present invention can be executed as a repeatable non-destructed system which can be continued used after the crash without further effort by getting itself into its origin starting configuration (e.g. a traditional compression spring) or a one-time stressed and thereby deformed system (like a three-dimensional sheet) which must be replaced by a new one (like state of the art front crash boxes). It depends on the respective embodiment of the present invention and different examples and preferably design is given in the following.

The "Research Council for Automobile Repairs" developed a so-called "RCAR-crash test" which evaluate with its test scenario the damaging and repair costs of collisions at lower speed. In Germany the results of the test are used for evaluating the vehicle type classification which influence the insurance premium ("Kasko" classification). Test criterion is the cost effort which is needed to maintenance the vehicle after the collision. As a result this classification is an important purchase decision of a car buyer directly influencing his running ancillary costs. For BEV and their battery compartments exists state of the art no kind of such a classification which evaluate the effort to repair and make the vehicle fit to drive again. But in the case there would be introduced such a system, the battery compartment of the present invention using a repeatable non-destructed spring system within a double-floor-system has an important advantage by saving costs for the consumer. Also without such an evaluating system the cost effort after a collision is much lower and helps significantly to increase the safety and simultaneously reduce costs for BEV.

As a preferably design of the present invention spring steels, more preferably stainless spring steels, are used to fulfil the physical principle of a mechanical compression spring in a material solution way. As an ideal embodiment for the present invention steels are used which have a yield strength $R_{P0,2} \geq 500MPa$, more preferably $R_{P0,2} \geq 800MPa$, and a tensile strength $Rm \geq 1,000MPa$, with a ratio between yield strength and tensile strength $\geq 80\%$. Such spring steels are the low chromium, manganese and silicon alloyed carbon steels like 38Si7, 61SiCr7, partially also low molybdenum and vanadium alloyed steels like 52CrMoV4. These steels can be hardened and quenched to reach the final application properties. They are fully magnetic. Typically, hardenable spring steels appropriate for the present invention are enlisted in table 1.

Table 1: Hardenable spring steels

| Short name | Material number | Standard |
|---|---|---|
| 38Si7 | 1.5023 | EN 10089 |
| 61SiCr7 | 1.7108 | EN 10089 |
| 52CrMoV4 | 1.7701 | EN 10089 |
| 51CrV4 | 1.8159 | EN 10089 |
| C67E | 1.1231 | EN 10132 |

Another, more preferably material group is the area of stainless spring steels like the austenitic grades 1.4310, 1.4401, 1.4539 or 1.4571. The austenitic stainless spring steels show only a low magnetizability. Additionally, also Duplex stainless steels like 1.4462 with a ferritic-austenitic mixed microstructure, ferritic stainless steels like 1.4016 or the martensitic grades like 1.4028 can be used as stainless spring steel for the present invention. With precipitation hardening grades like 1.4568 strength levels C1700 (1700-1900MPa) according to EN 10151 are available in strain-hardened condition. With the Typically stainless spring steels appropriate for the present invention are enlisted in table 2.

Table 2: strain hardening stainless spring steels

| Short name EN 10027-1 | Material number EN 10027-2 | Standard For springe hinge |
|---|---|---|
| X30 Cr13 | 1.4028 | EN 10151 |

(continued)

| Short name EN 10027-1 | Material number EN 10027-2 | Standard For springe hinge |
|---|---|---|
| X10CrNi18-8 | 1.4310 | EN 10151 |
| X 5 CrNi 18-10 | 1.4301 | EN 10151 |
| X8CrMnNi19-6-3 | 1.4376 | --- |
| X 5 CrNiMo 17-12-2 | 1.4401 | EN 10151 |
| X 2 CrNiMoN 22-5-3 | 1.4462 | |
| X 1 NiCrMoCuN 25-20-5 | 1.4539 | |
| X 6 CrNiMoTi 17-12-2 | 1.4571 | |
| X 7 CrNiAl17-7 | 1.4568 | EN 10151 |
| X30 MnCrN 16-14 | 1.4678 | --- |

It is obvious that alloy-related and microstructure related similar grades (e.g. 1.4303, 1.4306, 1.4307 in relation to 1.4310 or 1.4404 in relation 1.4401 or 1.4021, 1.4031 in relation to 1.4028) are also suitable for the present invention. Moreover, a dissimilar material combination is possible to ensure the best possible material behavior for the object of the present invention. As one preferably embodiment the inner bottom could be manufactured with a press-hardenable ultra-high strength steel like a 22MnB5 or 1.4034 combined with a spring steel like a 1.4310 for the spring system and the outer-skin. With such a material combination the battery compartment of the present invention becomes attuned to the vehicle corrosion protection system.

One difference between low-alloyed and stainless springs steel is the way how to reach the desired spring properties: Low-alloyed steels need a heat treatment process with hardening and quenching. Compared with this, stainless spring steels reached their application properties by a strain hardening because of cold rolling. One advantage of stainless spring steels is the benefit of corrosion resistance in the wet underbody area of an electric vehicle. Further stainless steels have a higher acid-resistance in the case of a leakage with battery liquid and a higher heat and thermal resistance. The last point is important that the battery compartment can maintain the structure during an outside case of fire. A special material group are the high manganese-alloyed TWIP-hardening (Twinning Induced Plasticity) steels, in particular the stainless manganese-chromium alloyed 1.4678 which shows under every deformation and after welding no magnetizability as a special benefit and can be hardened by strain hardening up to 2,000MPa.

Another possible material which fulfil the object of the present invention is a composite material like fiber-reinforced plastic which can reduce the weight in comparison to the before mentioned steel solutions but increases significantly component costs. The typical reinforcement fibre types like inorganic variants like ceramic or glass fibre are possible to applicate as well as organic variants like aramid or carbon fibre. Also different types of plastic itself could be applicated. Further, sandwich structures like (stainless) steel-polymer-compound materials can be pointed out as suitable materials working the present invention.

Wood could be another material solution known as a spring material from applications like boats or mattresses but is more critical in point of space requirement, material thickness and must protected by soaking e.g. with oil to reach the safety fire requirements and withstand aging for vehicle lifetime. Also dissimilar material combination of the mentioned before materials are suitable, but higher in cost and production complexity.

One manufacturing aspect which selects (stainless) steels as the preferred material is the possibility of fixing the alternative spring materials to metallic surrounding parts of the double-floor-system for a sufficient high force transmission of the parts. Further the recycling aspect and higher effort for separating the dissimilar materials is an advantage to use springs made of (stainless) steel.

But not only the type of the material also the form of the material can be work as a mechanical compression spring and therefore fulfill the physical operating principle of the present invention. Every kind of a three-dimensional sheet like structured, textured or profiled sheets can be integrated inside the double-floor system having a spring effect. During an impact, they will be compressed. During this way, they will absorb the crash energy and will feature a high resistance against the impact force at the end of their deformation way. Such profiled sheets can be corrugated sheets, honeycomb structures, flexible rolled sheets, perforated sheets, nubs and knobs sheets, trapezoidal sheets, hunched sheets, projected sheets, edge sheets or pyramid structured sheets. Further a sheet with introduced load pathes like mentioned in the WO patent 2017009244A1 is possible to use.

Also, nested or interlaced designs of at least two forms are suitable to implement the physical principle of a mechanical compression spring. One further embodiment of the present invention is the use of component like a (nested) folding box or a crumble box. Regarding to that kind of structure the position can be settled with a distance element. One preferably kind of distance element is a folding element which is pre-cutted at different sides and can be bended during a second step, preferably under an angle of 45° to the folding box. It is also possible to connect or weld two or more folding elements together, preferably having a common angle of 45°. The bended folding elements can be additionally welded with the inner or outer folding box as an additional fixing and reinforcement. Furthermore, also gusset plates, expanded metal or woven metal can be defined as a kind of nested or interlaced materials with regard to the object of the present invention.

Further, closed hydroformed structures like boxes, pillows, absorbers, cushions or paddings fulfil the object of the present invention. The hydroformed geometry can be adapted to the available assembly space inside the vehicle construction. Moreover it is possible to create a series connection of various hydroformed structures. The initial condition can be a plate, a at least two laser welded sheets or a welded tube, preferably a laser beam welded tube.

A further preferably embodiment of the present invention is the usage of tubes to work out the physical operating principle of a compression spring effect within a double-floor system. One framework condition is that the tubes must have a lower strength than the double-floor-system and other components which diverted the impact force so that it is possible that the tubes fold and absorb the energy during impact. Further the tubes shall be orientated with their length into crash direction side like traditional absorbers which enables a defined folding of the elements. Moreover the tubes can be slitted or stamped to define folding areas and folding directions.

Of course every kind of a compression spring can be also used to fulfil the physical operating principle of the present invention. Preferably spring types are spiral springs, plate springs, wave springs, conical springs, annular spring, leg springs or trapezoidal springs. The springs can be set-up in different arrangements to fulfill the physical operating principle of the present invention in the particular vehicle condition and to reach the best combination of stiffness and energy absorption:

- parallel arrangement
- serial arrangement
- combined arrangement

One preferably design example is a sliding friction system which also fulfill the idea of the present invention. In this case the outer-skin and the inner bottom are arranged nonparallel with an increasing constriction in the direction of the inner bottom. The physical operating principle of a mechanical compression spring is hereby performed by a friction element like a block or a pad which switch during an impact in the direction of the inner bottom. Because of the increasing constriction, the sliding resistance will increase more and more and therefore increase the resistance against the impact. Conversely the intrusion speed will decrease in the same manner and therefore the effect of force and acceleration to the occupants will be also softened. The element can be stopped in a constructive way at the maximum tolerable intrusion if the distance between outer-skin and inner bottom at this location fall below the width of the element. Also here the before mentioned effect of slipping is possible to avoid slitting from the underbody side. Picture 4 illustrates the embodiment.

As one additionally embodiment of the present invention, the battery compartment can be connected with the underbody of the vehicle with a guiding element, preferably an oblong hole. The guiding element must be orientated with its longitudinal side in cross direction of the vehicle if the battery compartment covers the whole underbody. With such a design, it is possible to create a two-zone deformation space during a side impact: The first zone is on the side of the impact and designed as the present invention means the impact works against the outer-skin of the double-floor and the inserted spring system absorb the crash energy by compressing. If the impact is too high, the connection over the oblong hole with the underbody can switch and yielded into the spring system of the other, impact averted side. This describes the second zone. The number of guidance elements must be at least 1, more preferably two or more. Another suitable guiding element for the mentioned embodiment is a linear guidance. Separating from the US patent application 2017029034A1 in the battery compartment of the present invention is no frangible connector which breaks during side impact.

Independent from the used material, machine element, component or assembled module which fulfill the physical operating principle of a mechanical compression spring manufactured by steel or other materials like composites, it is possible to define for every embodiment the typical spring values to characterize the properties of the system. One parameter is the spring rate, or also called spring stiffness or spring hardness, which defines the ratio of a force which affects on the spring and the therefore induced displacement of the spring. Depending on the desired crash behavior the ratio can be shown a linear or a non-linear characteristic. A non-linear progressive characteristic could be used if the OEM wants to absorb firstly the energy and at the end creating a high resistance against the impact. Conversely a degressive characteristic can be used if initially a high resistance is desired and then the energy will be absorbed. The spring rate D as an SI-unit can be calculated by using the formula (1):

$$D = F / \Delta L = (E * A) / L_0 \text{ with the physical unit } N \cdot m{-}1 = kg \cdot s{-}2 \qquad (1)$$

Thereby F [kN] is the compressive force or here more detailed the impact force into the double-floor system, $\Delta L$ [mm] is in general the deviation and in this case the contraction of the spring (system) inside the double-floor system before reaching the block length, E is the material-depending Young's modulus [N/m$^2$], A is the cross-sectional area of the spring (system) and Lo is the initial length of the spring (system) or in other words the inside length of the double floor system.

The spring rate can be adapted for every spring system.

One other parameter is the spring deflection which is described for a compressive (spiral) spring as the way the spring can cover from the initial unloaded state up to the state where winding upon winding is located. The end state is called block length. The spring deflection can be interpreted as the tolerable intrusion level of the crash compartment and depends and the usable underbody and side package area. The higher the spring deflection, the higher is the energy absorption and the lower the forces and accelerations on the occupant. As a particularly favorable spring design for the present invention, a conical helical compression spring or a system with the same operating principle can be mentioned with the advantage of a defined block length in combination with a low package need and a high energy absorption potential (low spring rate).

With these parameters the battery compartment of the present invention can be designed model-specific and brand-specific depending on what package space, company defined intrusion level, underbody height, construction method and driving behavior is desired.

Main target of the double-floor system combined with the spring system inside of the present invention is to absorb the impact or crash energy during an impact into the battery compartment of the vehicle. The relevant physical quantity for this is the energy $\varepsilon$ [J] or [N * m]. If $\varepsilon$ is negative, the system absorbs energy and it can be called energy absorption. The energy absorption can be calculated by using the formula (2):

$$\varepsilon = F * \Delta L \qquad (2).$$

Thereby F can be calculated in turn by using the formula (3):

$$F = m * a \qquad (3)$$

whereby m [kg] is defined as the mass of the impacting element, e g. another vehicle, crash barrier or a tree, and a [m/s$^2$] can be defined as acceleration.

As one calculation example:
Another vehicle (car1) with a weight of 1,5 tonnes (m = 1,500kg) collidates with a vehicle (car2) using the protection system of the present invention in a way that a side-impact happens for car2, and car1 has a speed before impacting of $v_1$ = 60km/h ($v_1$ = 16.6m/s). After impact the speed must be v2 = 0m/s. An acceleration of a = -16.7m/s$^2$ follows. The impact force F can now be calculated with F = -25,000N. In this example the spring (system) inside the double-floor system is carried out by having a way of 0,1m before block length is reached. That is the targeting contraction in this case because a further damage of components must be avoided. The resulting energy absorption is then $\varepsilon$ = - 2,500J. The required spring rate can now be calculated with D = F/$\Delta L$ = 250,000N/m. The values E, A, $L_0$ can be now designed in the necessary way.

The battery compartment of the present invention can optionally include inside rigid crash cross member to increase the inner bending stiffness and to protect further the batteries. Further the battery compartment ensures the physical protection according the UN R94 and R95 standards to protect against persons touching of the high-voltage components (IPXXB protection) which are completely covered. Further no high-voltage components are able to detach from the electric vehicle. Moreover no high-voltage components intrude into the passenger cell according to FMVSS 305. If necessary an additional double-floor system with spring effect could be positioned between battery compartment and passenger cell.

The functionality of the battery compartment of the present invention is independent from the mounting position within the electric vehicle. Preferably the battery compartment is located over the whole underbody to ensure a maximum battery range, a low centre of gravity and balanced driving dynamics. But also localized constructions like one-side compartments, front or rear-positioning will work. In these cases the spring effect of the battery compartment can be adjusted in a way that the crash-relevant side(s) will be worked out with other spring porperties and a more intensive double-floor-system than the non-stressed side(s). The up-set of the present invention can be also integrated as a variety of individual compartments integrated into an existing frame structure with longitudinal and cross beams to support and increase the existing safety level and to introduce to thin out (weight reduction) of the existing structure. This is one preferably design example for conversion design, pointed out later in detail.

The invention works independent from the type of the used accumulator inside like nickel-cadmium, nickel-metal hybrid, lithium ion or lithium air batteries. The battery management systems (BMS) for charge and discharge control (load management), temperature monitoring, distance assessment and diagnostic devices can be integrated into the battery compartment or not for the present invention. The same works for the temperature management system with its cooling fluid and cooling channels. High-voltage cables can be integrated within the inner side of the inner bottom to protect the occupants or other persons against short circuits or electrification of the vehicle or its components.

The invention works for booth actually used developmental approaches: the conversion design and the purpose design. The purpose design describes a way of engineering where the complete vehicle, the space and all functions of it, were directly designed for a (battery) electric vehicle. For this approach the present invention can be directly integrated and considered already in the early development phase and vehicle setup. As one special purpose vehicle concept, the company BMW AG uses for its i-series a system with a life-module as a kind of a monocoque for the occupants and a drive module where the batteries are located. The present invention can be also integrated into such drive-module concept to protect the batteries. Further the physical principle used in the present invention could be additionally interposed between the two modules as a further safety function to protect the occupants from the high-voltage components of the drive module. But also the other actually used approach for electric vehicles, the conversion design can be used with the present invention: The conversion design describes a method where a conventional vehicle constructed with a combustion engine is adapted into an electric vehicle. The available space and connection points must be considered. Then the battery compartment of the present invention and its safety functionality and effect mechanism can be also integrated into this kind of vehicle design.

With the present invention, it is also possible to carry out the battery compartment as an interchangeable system, a so-called exchangeable battery. In this case, at least one side of the double-floor spring system is fixed as a removable connection e.g. with screws, plug connectors, pin or bolt connections.

Moreover it is possible to integrate sensors for vibration, stress, position or movement measurement inside the double-floor-system as condition monitoring and collect data about the working behavior of the spring system inside.

In general the protection method of the present invention works for all moved systems or transportation systems using alternative powertrains like battery modules or a storage system and which have a high risk for an impact of at least one side. Also other powertrain components could be protected with a double-floor system with springs inside: (Hydrogen) fuel tanks, fuel cell stocks, natural gas tanks or even auxiliary engines, batteries and storage systems. With adjustment and scaling the present invention also works for other types of electric passenger or goods transport systems like electric busses, electric commercial vehicles, electric taxis or vehicles for parcel delivery. In this case the present invention could increase the safety according to the ECE R29-03 and ECE R66-02 significantly. For electric busses and commercial vehicles like trucks, the battery compartment is adjusted on the roof structure. In the case of a rollover or a roof crash, the physical operating principle of a mechanical compression spring combined with a double floor system can reduce the consequences of such an accident. Further the protection system of the present invention can be used as side or especially as front and rear underride guard for trucks. In this case not the protection of the vehicle where this system is fixed (truck) is in the main focus, in fact the bumping passenger car can be protected better. Future transport systems where a battery module is integrated which must be saved can be aircraft systems or drones. Also railway vehicles where in future battery modules are located can be protected by the system of the present invention. This is advantageously in less-developed suburban areas where a continuous power supply is not installed or fragile for attacks. The solution of the present invention can be also positioned for autonomous driving, e.g. for self-driving systems at airports, exhibition centers, stadiums or multifunctional arenas.

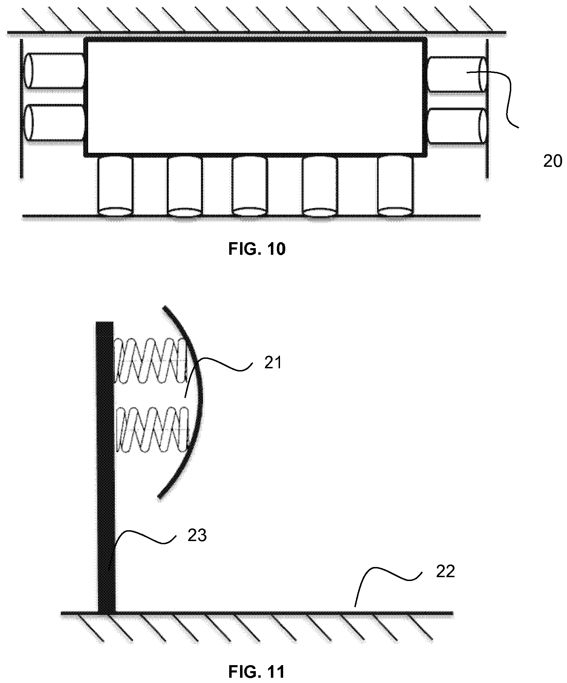

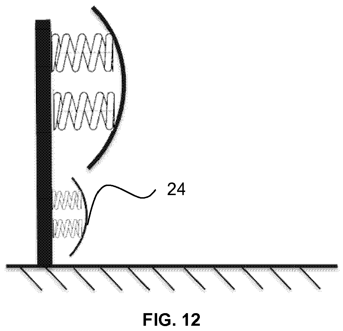

Further application areas could be stationary applications or energy-self-supporting applications in suburban spaces. In point of stationary systems the method of the present invention with the physical operating principle of a mechanical compression spring which is orientated with its working direction into crash direction and integrated into a double floor system, can be also used as a protection system in crash barriers, collision protection systems, garage doors or a protection against a shock wave after a blast. Used in crash barriers the system could absorb the collision with cars or especially with motorized two-wheelers. Figure 11 and figure 12 pointed out schematically two solutions, fig. 11 as a protection system of the actual crash barrier continuously along the roadway and fig. 12 with an additional smaller protection on the bottom side of the poles. The system could be especially used as a protection inside curves. By building up a series connection of springs with different spring rates, the protection is able to adapt itself and protect cyclists, motorcyclists or cars in a respectively optimized way. The additional protection of fig. 12 just for the poles at the bottom side can cover the poles at least from the half side to protect the fallen (motor)cyclists against the impact to the poles.

The idea of the present invention is worked out with the physical operating principle of a mechanical compression spring inside a double-floor system. If one regards the function structure of the system and defines the main sub functions of the system (absorbing energy, bypass the impact forces, protection against damaging), there exists further physical principles to reach the target of the present invention. Some solutions could use hydropneumatic, hydraulic or pneumatic principles e.g. as suspension systems, lever systems, frictional damper, impact absorbers, cushion absorbers or bag bellow systems. Further systems could be work with friction or magnetic. Because of costs for purchase and for repairing, error susceptibility and complexity of the system, only mechanical solutions are selected as a damping device. As one example for further additional costs, insurance companies use the results of the RCAR bumper test, which is used to evaluate the vehicle type classification and is raised for the insurance rating. Test criterion is here the cost expenditure for maintenance after a crash situation. One pointed out design example of those mentioned systems is e.g. a cushion (shock) absorber working like a spring within the double-floor system, where the spring(s) can be a cushion absorber system, which is integrated into the double-floor system. Different mediums like air, gases (working pneumatically) but also liquids (working hydraulic) are possible to insert into the absorber. Theoretically the cushion absorber can build a cycle with the cooling system of the battery system. To fulfil the safety requirements and to react graduated to the particular level of impact force, it is appropriate to use at least two different cushions absorbers, working as a series connection and having differences in their spring characteristic meaning a different spring rate.

The present invention is illustrated in more details referring to the following drawings where

Fig. 1 shows one preferred embodiment of the invention schematically seen from the side view,
Fig. 2 shows another preferred embodiment of the invention schematically seen from the side view,
Fig. 3 shows still another preferred embodiment of the invention schematically seen from the side view,
Fig. 4 shows further another preferred embodiment of the invention schematically seen from the side view,
Fig. 5 shows one another preferred embodiment of the invention schematically seen from the side view,
Fig. 6 shows one another preferred embodiment of the invention schematically seen from the side view,
Fig. 7 shows one another preferred embodiment of the invention schematically seen from the side view,
Fig. 8 shows one another preferred embodiment of the invention schematically seen from the top view,
Fig. 9 shows one another preferred embodiment of the invention schematically seen from the side view,
Fig. 10 shows one another preferred embodiment of the invention schematically seen from the side view,
Fig. 11 shows one another preferred embodiment of the invention schematically seen from the side view,
Fig. 12 shows one another preferred embodiment of the invention schematically seen from the side view.

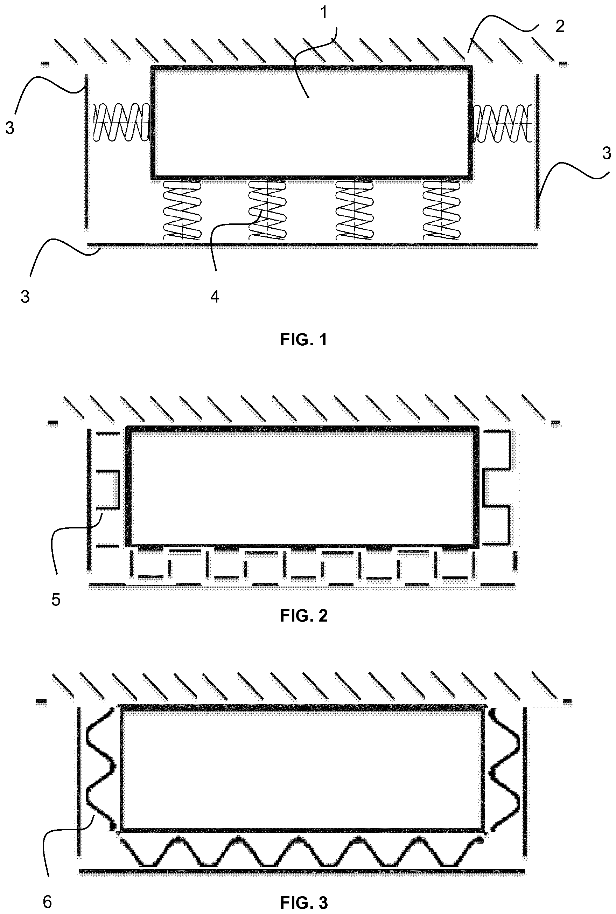

Fig. 1 illustrates the creating of a lightweight battery compartment with high energy absorption against underload and side- impact crash, where the mechanical compression spring 4 is integrated into a double floor system with the outer-skin 3 from the crash sides to protect the vehicle battery 1 whose case present the inner-shell of the double floor system. The battery compartment is connected and arranged under the vehicle underbody 2.

Fig. 2 illustrates an edge sheet 5 of a battery compartment with high energy absorption against underload and side- impact crash, where the physical operating principle of a mechanical compression spring 4 is presented by an edge sheet 5 as a three dimensional sheet included into a double floor system from the crash side.

Fig. 3 illustrates the corrugated sheet 6 of a battery compartment with high energy absorption against underload and side- impact crash, where the physical operating principle of a mechanical compression spring 4 is presented by a corrugated sheet 6 as a three dimensional sheet included into a into a double floor system from the crash side.

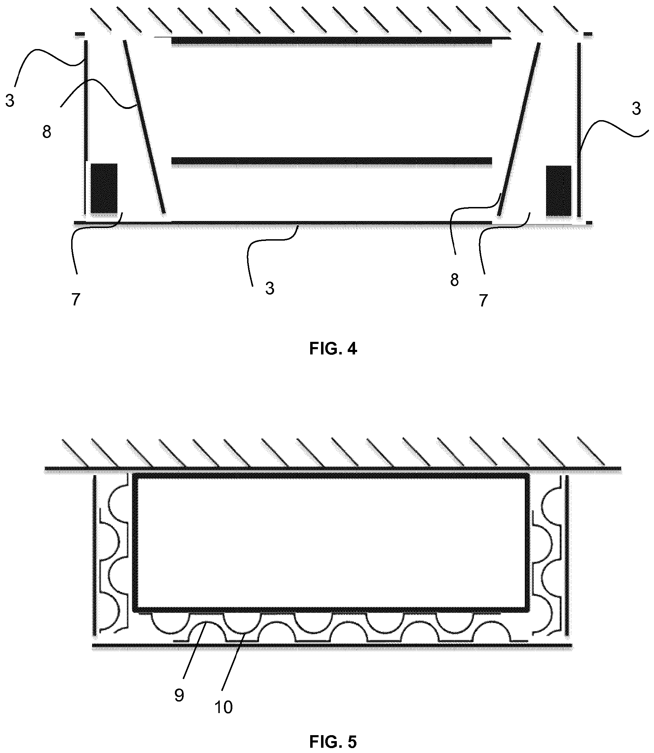

Fig. 4 illustrates the sliding friction system of a battery compartment with high energy absorption against underload and side- impact crash, where the physical operating principle of a mechanical compression spring 4 is presented by friction element 7 included into a double floor system from the crash side. The double floor system has in this case non-parallel side walls 8 to 3.

In accordance with Fig. 5 shows the example of two nested bullet sheets 9 and 10 which create the physical operating principle of a mechanical compression spring 4 within a double floor system.

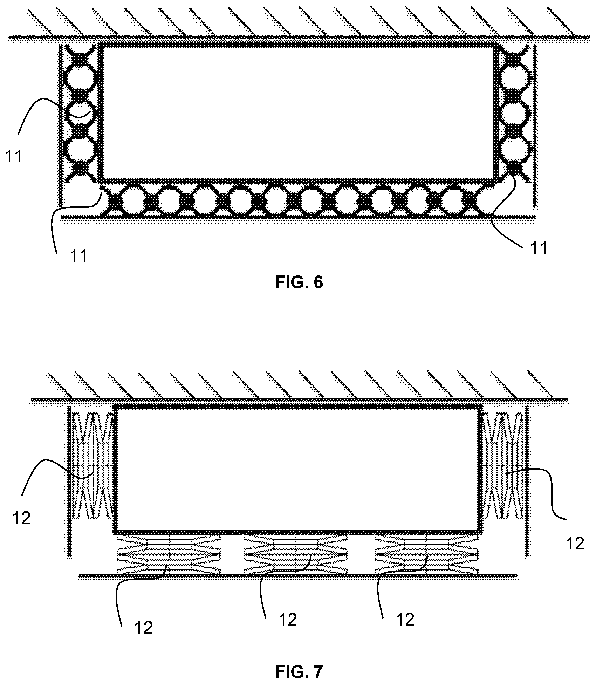

Fig. 6 illustrates further another preferred embodiment of the invention schematically the gusset plates profile 11 which creates the physical operating principle of a mechanical compression spring 4 within a double floor system.

Fig. 7 illustrates the one set of compression springs of a battery compartment with high energy absorption against underload and side- impact crash, where the mechanical compression spring 4 is worked out by a system of plate springs with serial arrangement 12 and integrated into a double floor system from the crash side.

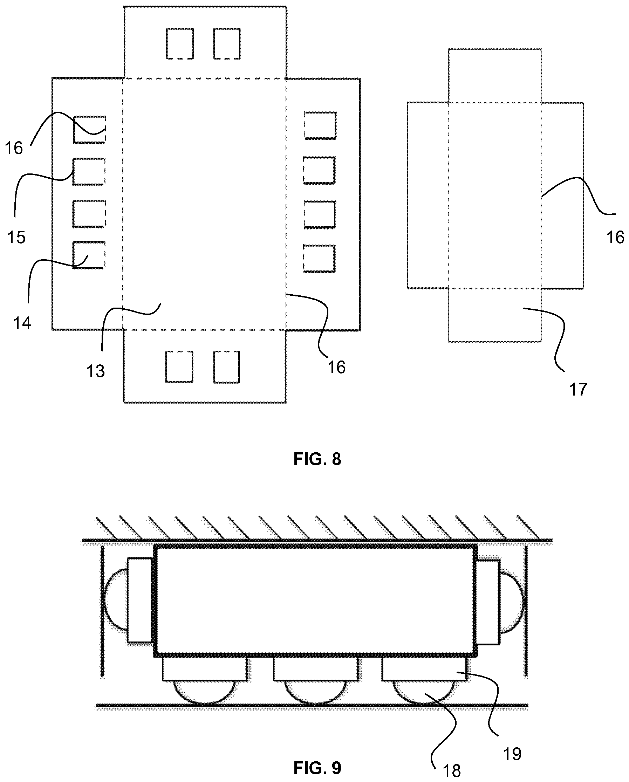

Fig. 8 illustrates an another preferably design which is the construction of a folding box system, where a first larger-dimensioned sheet 13 is used having distance elements 14 which are pre-cutted with cutted slots 15. In a second step bending or edging 16 follows to build up the outer-shell of the folding box with sticking out distance elements. The outer shell can be combined with a second smaller-dimensioned sheet 17 for the inner-side which is also bended or edged 16 into a folding box. On at least one of the two folding boxes are adjusted cutted slots on the sides which can be bended under 45° to create a defined distance between booth folding boxes and to fix the position of the inner folding box. The so created distance-keeper also work with the physical operating principle of a mechanical compression spring 4.

Fig.9 illustrates another preferably design which is the construction of a cushion (shock) absorber, where two cushions in a series-connection arrangement work with the physical operating principle of a mechanical compression spring 4. In this design a softer cushion 18 is located at the outer-side to absorb the first impact for a lower vehicle speed and therefore lower impact forces during crash. The inner cushion 19 with a stiffer spring characteristic of the series connection acts also if the impact force is on a higher level.

Fig.10 illustrates another preferably design which is the usage of tubes 20 which work with the physical operating principle of a mechanical compression spring 4. The tubes 20 must have a significantly lower strength than the double-floor system 1 + 3 to absorb the energy and to avoid the double-floor system from damaging.

Figure 11 illustrates another usage of the physical operating principle of a mechanical compression spring 4 included into a double floor system as a crash barrier along motorways or rural road. The system 21 is integrated with its working direction facing the street 22. The poles 23 bear the continuously system 21.

Figure 12 illustrates a second usage of the present invention as a crash barrier component. Around the poles 23 local protections 24 are arranged at the bottom side at least from the half side to protect the fallen (motor)cyclists against the impact into the poles.

**Claims**

1. A crash safety battery compartment configured to receive a battery (1) having a case, said battery compartment comprising:

   • an outer skin (3),
   • one or more elements (4, 5, 6, 7, 9, 10, 11, 12, 18, 19, 20) operating on the physical principle of a mechanical compression spring, wherein
   • the elements (4, 5, 6, 7, 9, 10, 11, 12, 18, 19, 20) are arranged so that one axis of one or more of the elements (4, 5, 6, 7, 9, 10, 11, 12, 18, 19, 20) is perpendicular to a corresponding axis of one or more of the elements,

   **characterised in that**
   the one or more elements (4, 5, 6, 7, 9, 10, 11, 12, 18, 19, 20) are positioned between the outer skin (3) and a space for receiving a battery (1) whereby the elements (4, 5, 6, 7, 9, 10, 11, 12, 18, 19, 20) hold a battery (1) in place in a battery compartment having a double floor system comprising the battery (1) case and the outer skin (3).

2. The crash safety battery compartment according to claim 1, wherein the compartment is formed of a spring steel material, preferably a stainless spring steel material.

3. The crash safety battery compartment according to claim 1 or 2, wherein the compartment is formed of a composite, compound or sandwich structure material.

4. The crash safety battery compartment according to any of the preceding claims, wherein the one or more elements (4, 5, 6, 7, 9, 10, 11, 12, 18, 19, 20) are compression spring(s).

5. The crash safety battery compartment according to any of the preceding claims, wherein the elements (4, 5, 6, 7, 9, 10, 11, 12, 18, 19, 20) are arranged and fixed as a parallel connection

6. The crash safety battery compartment according to any of the preceding claims, wherein the one or more elements (4, 5, 6, 7, 9, 10, 11, 12, 18, 19, 20) are three dimensional sheets.

7. The crash safety battery compartment according to any of the preceding claims, wherein the one or more elements (4, 5, 6, 7, 9, 10, 11, 12, 18, 19, 20) are nested or interlaced materials.

8. The crash safety battery compartment according to any of the preceding claims, wherein the one or more elements (4, 5, 6, 7, 9, 10, 11, 12, 18, 19, 20) are hydroformed structures.

9. The crash safety battery compartment according to any of the preceding claims, wherein the one or more elements (4, 5, 6, 7, 9, 10, 11, 12, 18, 19, 20) are deformed sheets with introduced load paths.

10. The crash safety battery compartment according to any of the preceding claims, wherein a distance element is used with the one or more elements (4, 5, 6, 7, 9, 10, 11, 12, 18, 19, 20) which are nested or interlaced designs of at least two forms.

**11.** The crash safety battery compartment according to claim 1, wherein the double floor system comprises an integrated sliding friction system.

**12.** The crash safety battery compartment according to claim 1, wherein the battery compartment is connected to the underbody of a vehicle with a guiding element, preferably an oblong hole.

**13.** The crash safety battery compartment according to claim 1, wherein the battery compartment is used on the roof structure of electric buses, electric commercial vehicles, aircrafts or drones.

**14.** The crash safety battery compartment according any of the preceding claims, wherein the underbody is configured so that a sharp pointed object will slip off during underbody slitting if the impact takes place with a slanted angle.

**15.** The crash safety battery compartment according any of the preceding claims, wherein the double floor spring system consists of exchangeable battery and it is fixed as a removable connection.

**Patentansprüche**

**1.** Crashsicherheits-Batteriefach, das dazu ausgestaltet ist, eine Batterie (1) mit einem Gehäuse aufzunehmen, wobei das Batteriefach Folgendes umfasst:

• eine Außenhaut (3),
• ein oder mehrere Elemente (4, 5, 6, 7, 9, 10, 11, 12, 18, 19, 20), die nach dem physikalischen Prinzip einer mechanischen Druckfeder funktionieren, wobei
• die Elemente (4, 5, 6, 7, 9, 10, 11, 12, 18, 19, 20) so angeordnet sind, dass eine Achse eines oder mehrerer der Elemente (4, 5, 6, 7, 9, 10, 11, 12, 18, 19, 20) senkrecht zu einer entsprechenden Achse eines oder mehrerer der Elemente verläuft,

**dadurch gekennzeichnet, dass**
das eine oder die mehreren Elemente (4, 5, 6, 7, 9, 10, 11, 12, 18, 19, 20) zwischen der Außenhaut (3) und einem Raum zum Aufnehmen einer Batterie (1) befindlich sind, wodurch die Elemente (4, 5, 6, 7, 9, 10, 11, 12, 18, 19, 20) eine Batterie (1) in einem Batteriefach mit einem Doppelbodensystem, welches das Gehäuse der Batterie (1) und die Außenhaut (3) umfasst, an ihrem Platz halten.

**2.** Crashsicherheits-Batteriefach nach Anspruch 1, wobei das Fach aus einem Federstahlmaterial, vorzugsweise einem rostfreien Federstahlmaterial, ausgebildet ist.

**3.** Crashsicherheits-Batteriefach nach Anspruch 1 oder 2, wobei das Fach aus einem Kompositwerkstoff, einem zusammengesetzten Material oder einem Material mit Sandwichstruktur ausgebildet ist.

**4.** Crashsicherheits-Batteriefach nach einem der vorhergehenden Ansprüche, wobei das eine oder die mehreren Elemente (4, 5, 6, 7, 9, 10, 11, 12, 18, 19, 20) (eine) Druckfeder(n) ist/sind.

**5.** Crashsicherheits-Batteriefach nach einem der vorhergehenden Ansprüche, wobei die Elemente (4, 5, 6, 7, 9, 10, 11, 12, 18, 19, 20) als eine parallele Verbindung angeordnet und befestigt sind.

**6.** Crashsicherheits-Batteriefach nach einem der vorhergehenden Ansprüche, wobei das eine oder die mehreren Elemente (4, 5, 6, 7, 9, 10, 11, 12, 18, 19, 20) dreidimensionale Flächengebilde sind.

**7.** Crashsicherheits-Batteriefach nach einem der vorhergehenden Ansprüche, wobei das eine oder die mehreren Elemente (4, 5, 6, 7, 9, 10, 11, 12, 18, 19, 20) verschachtelte oder ineinandergefügte Materialien sind.

**8.** Crashsicherheits-Batteriefach nach einem der vorhergehenden Ansprüche, wobei das eine oder die mehreren Elemente (4, 5, 6, 7, 9, 10, 11, 12, 18, 19, 20) innenhochdruckumgeformte Strukturen sind.

**9.** Crashsicherheits-Batteriefach nach einem der vorhergehenden Ansprüche, wobei das eine oder die mehreren Elemente (4, 5, 6, 7, 9, 10, 11, 12, 18, 19, 20) umgeformte Flächengebilde mit eingebrachten Lastpfaden sind.

**10.** Crashsicherheits-Batteriefach nach einem der vorhergehenden Ansprüche, wobei ein Abstandselement mit dem einen oder den mehreren Elementen (4, 5, 6, 7, 9, 10, 11, 12, 18, 19, 20), die verschachtelte oder ineinandergefügte Gebilde mit wenigstens zwei Formen sind, benutzt wird.

**11.** Crashsicherheits-Batteriefach nach Anspruch 1, wobei das Doppelbodensystem ein integriertes Gleitreibungssystem umfasst.

**12.** Crashsicherheits-Batteriefach nach Anspruch 1, wobei das Batteriefach mit dem Unterboden eines Fahrzeugs mit einem Führungselement, vorzugsweise einem Langloch, verbunden ist.

**13.** Crashsicherheits-Batteriefach nach Anspruch 1, wobei das Batteriefach auf der Dachstruktur von Elektrobussen, Elektronutzfahrzeugen, Luftfahrzeugen oder Drohnen benutzt wird.

**14.** Crashsicherheits-Batteriefach nach einem der vorhergehenden Ansprüche, wobei der Unterboden so ausgestaltet ist, dass ein spitz zulaufendes Objekt während eines Aufschlitzens des Unterbodens abrutscht, wenn der Aufprall mit einem schrägen Winkel erfolgt.

**15.** Crashsicherheits-Batteriefach nach einem der vorhergehenden Ansprüche, wobei das Doppelboden-Federsystem aus einer auswechselbaren Batterie besteht und als eine lösbare Verbindung befestigt ist.

**Revendications**

**1.** Compartiment de batterie de sécurité en cas de collision configuré pour recevoir une batterie (1) ayant un boîtier, ledit compartiment de batterie comprenant :

  • une peau extérieure (3),
  • un ou plusieurs éléments (4, 5, 6, 7, 9, 10, 11, 12, 18, 19, 20) fonctionnant sur le principe physique d'un ressort de compression mécanique, dans lequel
  • les éléments (4, 5, 6, 7, 9, 10, 11, 12, 18, 19, 20) sont agencés de sorte qu'un axe d'un ou de plusieurs des éléments (4, 5, 6, 7, 9, 10, 11, 12, 18, 19, 20) est perpendiculaire à un axe correspondant d'un ou de plusieurs des éléments,

  **caractérisé en ce que**
  l'un ou plusieurs éléments (4, 5, 6, 7, 9, 10, 11, 12, 18, 19, 20) sont positionnés entre la peau extérieure (3) et un espace destiné à la réception d'une batterie (1) moyennant quoi les éléments (4, 5, 6, 7, 9, 10, 11, 12, 18, 19, 20) maintiennent une batterie (1) en place dans un compartiment de batterie comportant un système de double plancher comprenant le boîtier de batterie (1) et la peau extérieure (3).

**2.** Compartiment de batterie de sécurité en cas de collision selon la revendication 1, dans lequel le compartiment est formé d'un matériau en acier à ressort, de préférence un matériau en acier à ressort inoxydable.

**3.** Compartiment de batterie de sécurité en cas de collision selon la revendication 1 ou la revendication 2, dans lequel le compartiment est formé d'un composite, d'un matériau à structure composite ou sandwich.

**4.** Compartiment de batterie de sécurité en cas de collision selon l'une quelconque des revendications précédentes, dans lequel l'un ou plusieurs éléments (4, 5, 6, 7, 9, 10, 11, 12, 18, 19, 20) sont des ressorts de compression.

**5.** Compartiment de batterie de sécurité en cas de collision selon l'une quelconque des revendications précédentes, dans lequel les éléments (4, 5, 6, 7, 9, 10, 11, 12, 18, 19, 20) sont agencés et fixés en tant que connexion parallèle.

**6.** Compartiment de batterie de sécurité en cas de collision selon l'une quelconque des revendications précédentes, dans lequel l'un ou plusieurs éléments (4, 5, 6, 7, 9, 10, 11, 12, 18, 19, 20) sont des tôles tridimensionnelles.

**7.** Compartiment de batterie de sécurité en cas de collision selon l'une quelconque des revendications précédentes, dans lequel l'un ou plusieurs éléments (4, 5, 6, 7, 9, 10, 11, 12, 18, 19, 20) sont des matériaux imbriqués ou entrelacés.

**8.** Compartiment de batterie de sécurité en cas de collision selon l'une quelconque des revendications précédentes, dans lequel l'un ou plusieurs éléments (4, 5, 6, 7, 9, 10, 11, 12, 18, 19, 20) sont des structures hydroformées.

9. Compartiment de batterie de sécurité en cas de collision selon l'une quelconque des revendications précédentes, dans lequel l'un ou plusieurs éléments (4, 5, 6, 7, 9, 10, 11, 12, 18, 19, 20) sont des tôles déformées avec des voies de charge introduites.

10. Compartiment de batterie de sécurité en cas de collision selon l'une quelconque des revendications précédentes, dans lequel un élément de distance est utilisé avec l'un ou plusieurs éléments (4, 5, 6, 7, 9, 10, 11, 12, 18, 19, 20) qui sont des motifs imbriqués ou entrelacés d'au moins deux formes.

11. Compartiment de batterie de sécurité en cas de collision selon la revendication 1, dans lequel le système de double plancher comprend an un système de friction coulissant intégré.

12. Compartiment de batterie de sécurité en cas de collision selon la revendication 1, dans lequel le comportement de batterie est connecté au soubassement d'un véhicule à l'aide d'un élément de guidage, de préférence un trou oblong.

13. Compartiment de batterie de sécurité en cas de collision selon la revendication 1, dans lequel le comportement de batterie est utilisé sur la structure de toit de bus électriques, de véhicules commerciaux électriques, d'aéronefs ou de drones.

14. Compartiment de batterie de sécurité en cas de collision selon l'une quelconque des revendications précédentes, dans lequel le soubassement est configuré de telle sorte qu'un objet pointu aiguisé glissera lors de la découpe du soubassement si l'impact a lieu avec un angle incliné.

15. Compartiment de batterie de sécurité en cas de collision selon l'une quelconque des revendications précédentes, dans lequel le système de ressort à double plancher se compose d'une batterie interchangeable et est fixé comme une connexion amovible.

**FIG. 1**

**FIG. 2**

**FIG. 3**

FIG. 4

FIG. 5

FIG. 6

FIG. 7

16

15

14

13

16

16

17

**FIG. 8**

18

19

**FIG. 9**

FIG. 10

FIG. 11

24

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2565958 B1
- DE 102014213306 A1
- DE 102009035492 A1
- US 2016068195 A1
- WO 2017012850 A1
- DE 102016209105 A1
- US 2015239331 A1
- US 2017029034 A1
- US 2016233468 A1
- US 2016229308 A1
- US 2016064723 A1
- WO 2017009244 A1

### Non-patent literature cited in the description

- **M. BÜCHSNER.** Integration of occupant safety systems into seating environment in the light of autonomous driving. *presentation at 2nd Annual Seating Innovation Summit Berlin,* 06 April 2017
- **H.-H. BRAESS ; U. SEIFFERT.** Vieweg Handbuch Kraftfahrzeugtechnik. ATZ Vieweg Teubner, 2011